# EUROPEAN PATENT SPECIFICATION

(11) **EP 1 091 149 B1**
(45) Date of publication and mention of the grant of the patent: **19.04.2006**
(21) Application number: 00118066.0
(22) Date of filing: 23.08.2000
(51) Int. Cl.: F16H 59/02, F16H 61/24

(54) **Damper for shift linkage**
Dämpfer für Schaltgestänge
Dispositif d'amortisseur pour timonerie de changement de vitesse

(30) Priority: 07.10.1999 GB 9923611
(43) Date of publication of application: 11.04.2001
(73) Proprietor: Bayerische Motoren Werke Aktiengesellschaft, 80809 München (DE)
(72) Inventor: Reynolds, Benjamin John, Leamington Spa, Warwickshire CV32 5XA (GB); Watkins, Alexander William, Brierley Hill, West Midlands DY5 3NZ (GB)
(74) Representative: König, Heinz

(56) References cited:
- DE-A- 2 658 019
- DE-A- 4 231 248
- US-A- 5 927 151

## Description

The present invention relates to a selector damper arrangement and more particularly to such an arrangement used with regard to a gear selector or selector within a motor vehicle.

Such selector damper arrangement is known from DE 26 56 019 A, which discloses all the features of the preamble of claim 1.

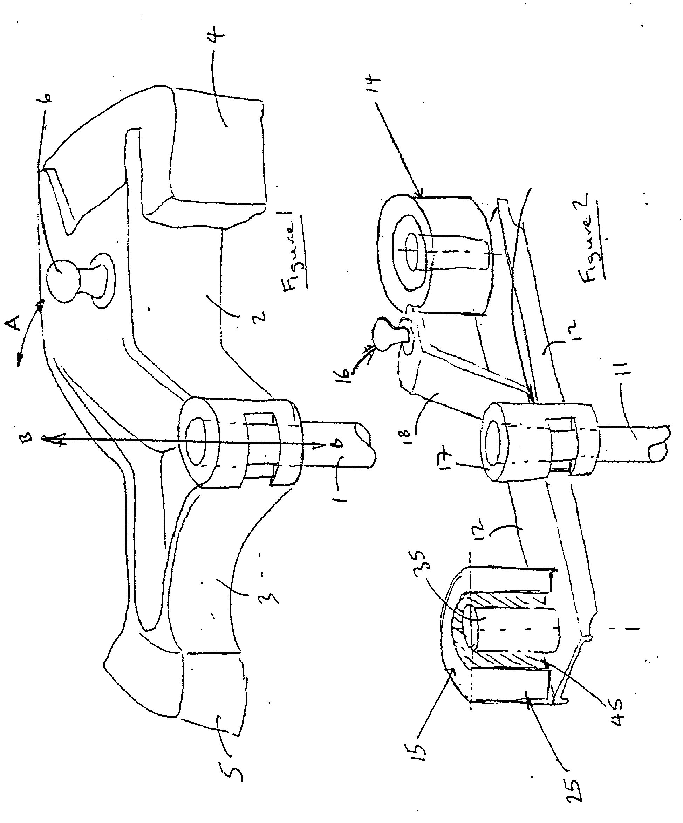

Operation of selector arrangements in order to control through displacement selection of various operational functions of a mechanism is known. For example, within a motor vehicle a manual gear selector enables selection of a number of gear ratios in order to operate a vehicle in accordance with engine load and road conditions. Generally, a remote control mechanism using cables or rods is used to transfer gear selector movement into a 'select' motion at an appropriate joint It will also be understood that in order to make such displacements and selections through a selector it is necessary to provide adequate inertia to generate the force required to produce the necessary operational function selection. Thus, typically a selector will include as illustrated in Figure 1, a mass assembly to increase the selector effect provided through displacement of the selector in the direction of arrowheads A. In such circumstances, the selector 1 includes respective couplings 2, 3 which are associated with mass elements 4, 5 such that movements of joint 6 in the direction A are transferred through the couplings 2, 3 in order to produce rotational motions about axis B-B of the selector 1. Typically, the couplings 2, 3 and mass elements 4, 5 will be cast or welded together. The effect of the mass elements 4, 5 is to provide inertia to the rotation of the selector 1 produced by the joint 6 to ensure smoother and easier selection of gears.

Unfortunately, the mass elements 4, 5 will exacerbate any vibration problems produced by the mechanism or other sources presented through the selector 1. These vibrations cause significant problems arranging from simple acoustic rattle through to the premature failure of components associated with the selector 1 including the mechanism controlled by the selector 1.

Various attempts have been made in the past to relieve the problems of the mass elements 4, 5 exacerbating the vibration in the selector arrangement. Typically, solutions or approaches to diminishing vibration problems have been through shaping the respective mass elements 4, 5 along with relative spacing of the couplings 2, 3 to avoid harmonics. Thus, a degree of vibration cancellation can be achieved by suitable choice of mass element 4, 5 spacing, shaping and relative mass value. Clearly, such solutions are generally specific to a particular vehicle and so require individual and bespoke design solutions for each vehicle. More importantly, such solutions require an individual selector and actuator selector damper arrangement for each vehicle which does not allow the same selector and/or actuator selector damper arrangement to be used for several vehicles with the inherent benefit of the reduced component inventory and potentially cheaper supply.

It is an object of the present invention to provide an actuator or selector damper arrangement combining sufficient inertia for smooth operation but with limited or low vibration problems and which may be incorporated within a number of different vehicle types with only limited adaptation.

In accordance with the present invention there is provided a selector damper arrangement for a gear selector in a motor vehicle comprising the features of claim 1.

Preferably, the damper coupling is a rubber collar or sleeve between the selector and the mass assembly. Alternatively, the damper coupling could be a hydro-mount or spring assembly.

Typically, the mass assembly and the selector will be spaced relative to one another through a bridge coupling.

An embodiment of the present invention will now be described by way of example only with reference to Figure 2 of the accompanying drawings in which a perspective symbolic illustration of an actuator or selector damper arrangement is depicted.

Referring to Figure 2, it will be noted a selector 11 is coupled through a bridge coupling 12 to respective mass assemblies 14, 15. The bridge coupling 12 is secured to the selector 11 through a collar 17 welded to the selector 11. Also associated with the selector 11 through the bridge coupling 12 is a selector knob 16 which allows displacement of the selector 11 as required for the selector 11 to select various operational functions of a mechanism coupled to that selector 11.

For illustration purposes only, mass assembly 15 is depicted in cross-section. It should be noted that mass assembly 14 has a similar configuration to mass assembly 15. Thus, referring to mass assembly 15 specifically, it will be noted that there is a mass collar 25 which is held about a stub mounting 35 with a damper coupling 45 therebetween. Thus, the mass collar 25 can move freely within the range defined by the damper coupling 45 about the stub mounting 35. In such circumstances, vibrations presented through the selector 1 and bridge coupling 12 are de-coupled from the mass collar 25 and so vibration is not emphasised by the mass of the collar 25. In such circumstances, vibration problems should not be exacerbated by the inclusion of mass assemblies 14, 15.

Typically, the damper coupling 45 will comprise a very soft and therefore flaccid rubber or similar compound to enable movement of the mass collar 25 about the stub mounting 35. However, alternatively it will appreciated that the top of the collar 25 could be closed to provide an enclosed cavity within which a liquid could be captured in order to provide a hydro-mounting to allow movement of the collar about the stub mounting 35. Furthermore, a spring arrangement could be provided whereby springs are located between the mounting 35 and the collar 25 such that relative movement therebetween can be achieved.

It will be understood in comparison with the previous actuated damper arrangement depicted in Figure 1, where masses 4, 5 are integrally cast with the couplings 2, 3 about the selector 1, the present arrangement depicted in Figure 2 has the mass assemblies 14, 15 arranged such that the bulk of each assembly 14, 15 in the form of mass collars 25 can move within the displacement arrangement determined by the damper coupling 45. Thus, transient vibrations are absorbed within the elastic limits of that coupling 45 so that the mass of each mass collar 25 does not through its inertia exacerbate the transient vibrations presented through the selector 1 from the functional mechanism.

It will be understood that the present selector damper arrangement does not exhibit a characteristic frequency as there are too many variables within the arrangement as a result of bearing slack, selector cable run and clearance in order to produce the selection between various operational functions of a mechanism and other factors. In such circumstances, the problems of vibration rattle within an selector through the present damper arrangement configuration depicted in Figure 2 should be substantially eleviated.

It will be understood that typically the mass collar 25 will be substantially concentric about the mounting stub 35 in its relaxed state. Thus, the damper coupling 45 will bias the collar 25 to such a state. However, where desired, it will be understood that the damper coupling 45 could be shaped in order to provide an asymmetric response through different displacement ranges from its relaxed state. Thus, the damper coupling 45 could be thicker on one side of the stub mounting 35 in comparison with the other such that there is a greater range of displacement of the mass coupling 25 in that direction in comparison with the other before displacement lock. It will also be appreciated that it is an inherent feature of rubber and similar materials that generally resistance to impression increases with the level of compression of that rubber or similar material so that a further factor of such varying thicknesses of the damper coupling is variations in the resistance to displacement of the mass collar. A similar effect and asymmetric response from the damper coupling can be achieved through springs secured between the collar 25 and the mounting stub 35.

The bridge coupling 12, as illustrated, extends such that respective mass assemblies 14, 15 are in a substantially opposed configuration. However, it will understood that the actual spacing between the respective mass assemblies 14, 15 and the selector 11 and also relative to each other can be varied as required. Thus, the mass assembly 15 may be closer to the selector 11 than the mass assembly 14 or vice versa. Furthermore, the stub mounting 35 upon which each respective mass assembly 14, 15 is secured to the bridge coupling 12 may themselves be moved within slots (not shown) in the bridge coupling 12 in order to tune the selector 11 action. In such circumstances, the respective mass assemblies 14, 15 will be secured through bolts at the displaced positions relative to the selector 1 as required. Alternatively, the respective mass assemblies 14, 15 may be moved dynamically within slots or similar arrangements associated with the bridge coupling 12 in order to vary the position and spacing of the assemblies 14, 15 relative to the selector 11 for vibration damping and/or in order to facilitate the relevant movement for selection of respective operational functions of a mechanism coupled to the selector 11.

As illustrated, typically, two respective mass assemblies 14, 15 will be associated with a selector 11 however, it will also be understood that alternatively three or more mass assemblies may be secured to the selector 1 in order to provide the necessary inertia to facilitate selection of operational functions through the selector 1. These mass assemblies may be arranged in symmetrical or asymmetrical configurations about the selector 11 as required.

It will be understood that the present actuator selector and damper arrangement comprising the mass assemblies 14, 15 along with the bridge coupling 12 and collar 17 can be attached to a range of levers 11 associated with different vehicle configurations and operational mechanisms through welding of the collar 17 to that selector 11. In such circumstances, as described previously, specific tuning of the damper arrangement if required can be achieved through moving the respective spacings of the mass assemblies 14, 15 as required. However, generally the damper coupling 35 provided between the mass collar 25 and the mounting stub 35 will be sufficiently flaccid so that the mass inertia of the assemblies 14, 15 acts in order to facilitate displacement of the selector 11 but does not conjoin with the transient vibrations as a result of vehicle or mechanism operation in order to exacerbate vibration problems as previously described.

It will be noted that the selection knob 16 as depicted in Figure 2 is generally mounted upon a bracket 18 which raises the knob 16 above the mass assemblies 14, 15 to facilitate access to the knob 16. It will be understood previously that with an integral casting as depicted in Figure 1, the knob 6 could be secured to that casting.

## Claims

1. A selector damper arrangement for a gear selector in a motor vehicle, the arrangement comprising a rotary selector (11) displaceable in order to select various operational functions of a mechanism, the selector being coupled to a mass assembly (14, 15) arranged to provide adequate inertia to generate the force required to produce the necessary operational function selection, the mass assembly (14, 15) being coupled to the selector (11) through a damper coupling (45) which substantially decouples vibration between the mass assembly and the selector, **characterized in that** the arrangement comprises a mass assembly (14, 15) having two mass elements (14, 15) which are arranged in a substantially opposed configuration with respect to one another on either side of the selector (11) and that the respective mass elements (14,15) are not symmetrically spaced either side of the selector (11).

2. An arrangement as claimed in claim 1 wherein the damper coupling (45) comprises a rubber collar (17) or sleeve between the selector and the mass assembly (14, 15).

3. An arrangement as claimed in claim 1 wherein the damper coupling (45) comprises a hydro-mount between the mass assembly (14, 15) and the selector (11).

4. An arrangement as claimed in claim 1 wherein the damper coupling (45) comprises a spring means between the mass assembly (14, 15) and the selector (11).

5. An arrangement as claimed in any preceding claim wherein the mass assembly (14, 15) is coupled to the selector (11) through a bridge coupling (12).

6. An arrangement as claimed in any preceding claim wherein the mass assembly (14,15) comprises a mass collar (25) arranged about a stub mounting (35) with the damper coupling therebetween.

## Patentansprüche

1. Schalthebeldämpferanordnung für einen Gangschalthebel in einem Kraftfahrzeug, wobei die Anordnung einen Drehschalthebel (11) aufweist, der verschiebbar ist, um verschiedene Betriebsfunktionen eines Mechanismus zu wählen, wobei der Schalthebel mit einer Massebaugruppe (14, 15) gekoppelt ist, die angeordnet ist, um ausreichende Trägheit vorzusehen, um die Kraft zu erzeugen, welche erforderlich ist, um die notwendige Betriebsfunktionswahl zu realisieren, wobei die Massebaugruppe (14, 15) mit dem Schalthebel (11) über eine Dämpferkupplung (45) gekoppelt ist, welche die Vibrationen zwischen der Massebaugruppe und dem Schalthebel im Wesentlichen entkoppelt, **dadurch gekennzeichnet, dass** die Anordnung eine Massebaugruppe (14, 15) aufweist, die zwei Masseelemente (14, 15) aufweist, welche in einer in Bezug auf einander im Wesentlichen entgegensetzten Konfiguration auf beiden Seiten des Schalthebels (11) angeordnet sind, und dass die entsprechenden Masseelemente (14, 15) auf beiden Seiten des Schalthebels (11) nicht symmetrisch beabstandet sind.

2. Anordnung nach Anspruch 1, wobei die Dämpferkupplung (45) eine Gummimanschette (17) oder - hülse zwischen dem Schalthebel und der Massebaugruppe (14, 15) aufweist.

3. Anordnung nach Anspruch 1, wobei die Dämpferkupplung (45) ein Hydrolager zwischen der Massebaugruppe (14, 15) und dem Schalthebel (11) aufweist.

4. Anordnung nach Anspruch 1, wobei die Dämpferkupplung (45) ein Federmittel zwischen der Massebaugruppe (14, 15) und dem Schalthebel (11) aufweist.

5. Anordnung nach einem beliebigen der vorangehenden Anspruch, wobei die Massebaugruppe (14, 15) über eine Brückenkupplung (12) mit dem Schalthebel (11) gekoppelt ist.

6. Anordnung nach einem beliebigen vorangehenden Ansprüche, wobei die Massebaugruppe (14, 15) eine Massemanschette (25) aufweist, welche um eine Stumpflagerung (35) angeordnet ist, wobei die Dämpferkupplung dazwischen angeordnet ist.

## Revendications

1. Dispositif amortisseur de sélecteur pour un sélecteur de vitesses dans un véhicule à moteur, le dispositif comprenant un sélecteur rotatif (11) déplaçable de manière à sélectionner diverses fonctions opérationnelles d'un mécanisme, le sélecteur étant couplé à un ensemble de masses (14, 15) pour fournir une inertie adéquate à la génération de la force requise pour produire la sélection des fonctions opérationnelles nécessaires, l'ensemble de masses (14, 15) étant couplé au sélecteur (11) par un accouplement amortisseur (45) qui découple substantiellement les vibrations générées entre l'ensemble de masses et le sélecteur,
**caractérisé en ce qu'**
un ensemble de masses (14, 15) présente deux éléments de masse (14, 15) disposés l'un par rapport à l'autre dans une configuration substantiellement opposée de chaque côté du sélecteur (11), et les éléments de masse respectifs (14,15) ne sont pas espacés de manière symétrique de chaque côté du sélecteur (11).

2. Dispositif selon la revendication 1, dans lequel l'accouplement amortisseur (45) comprend un collier en caoutchouc (17) ou manchon entre le sélecteur et l'ensemble de masses (14, 15).

3. Dispositif selon la revendication 1, dans lequel l'accouplement amortisseur (45) comprend un montage hydraulique entre l'ensemble de masses (14, 15) et le sélecteur (11).

4. Dispositif selon la revendication 1, dans lequel l'accouplement amortisseur (45) comprend un moyen à ressorts entre l'ensemble de masses (14, 15) et le sélecteur (11).

5. Dispositif selon l'une quelconque des revendications précédentes, dans lequel l'ensemble de masses (14, 15) est couplé au sélecteur (11) par un montage en pont (12).

6. Dispositif selon l'une quelconque des revendications précédentes, dans lequel l'ensemble de masses (14, 15) comprend un collier de masse (25) autour d'un support d'embase (35), et l'accouplement amortisseur est disposé entre les deux.
